# EUROPEAN PATENT APPLICATION

(11) **EP 4 615 131 A1**
(43) Date of publication of application: **10.09.2025**
(21) Application number: 22964104.8
(22) Date of filing: 04.11.2022
(51) Int. Cl.: H04W 74/00, H04L 27/00

(54) **RANDOM ACCESS METHOD AND APPARATUS, AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN); LI, Yuanyuan, Beijing 100085 (CN); GOU, Jiatong, Beijing 100085 (CN)
(74) Representative: Stöckeler, Ferdinand
(86) International application number: PCT/CN2022/130093
(87) International publication number: WO 2024/092802

(57) **Abstract**

Provided in the present disclosure are a random access method and apparatus, and a storage medium. The method comprises: determining the number of times a physical random access channel (PRACH) is transmitted to a network-side device; indicating said number of times to the network-side device; and in response to having reached a first time point, starting a random access response (RAR) window for receiving an RAR message, wherein the first time point is a time point at which a terminal completes PRACH transmission of said number of times. In the present disclosure, the number of times the terminal transmits the PRACH is indicated to the network-side device, such that it is ensured that time points at which the network-side device and the terminal start RAR windows are consistent, thereby improving the success rate of receiving an RAR message and improving the success rate of random access.

## Description

### TECHNICAL FIELD

The present disclosure relates to the field of communication technologies, and particularly to a random access method and a random access apparatus, and a storage medium.

### BACKGROUND

In Release 18 (R18), for a physical random access channel (PRACH), effects such as PRACH coverage enhancement can be achieved by means of multiple PRACH transmissions to a network side device.

After completing multiple PRACH transmissions, the terminal may start receiving a random access response (RAR) message sent by the network side device. Time points at which the terminal starts receiving the RAR message are different for different numbers of PRACH transmissions. Since the number of PRACH transmissions is determined by the terminal, if the network device cannot determine the number of PRACHs sent by the terminal, it cannot determine a start time point at which the RAR message is sent to the terminal, which may lead to unreasonable RAR message scheduling.

### SUMMARY

In order to overcome the problem existing in the related art, embodiments of the present disclosure provide a random access method, a random access apparatus, and a storage medium.

According to a first aspect of embodiments of the present disclosure, a random access method is provided. The method is performed by a terminal and includes:
determining the number of transmissions of transmitting a physical random access channel (PRACH) to a network side device;
indicating the number of transmissions to the network side device; and
starting a random access response (RAR) window for receiving an RAR message when reaching a first time point, in which, the first time point is a time point after which the terminal has completed PRACH transmissions for the number of transmissions.

Optionally, indicating the number of transmissions to the network side device includes:
determining a first resource set corresponding to the number of transmissions; in which, a PRACH resource included in the first resource set is configured to indicate the number of transmissions to the network side device; and
transmitting the PRACH to the network side device according to the number of transmissions using the PRACH resource included in the first resource set.

Optionally, determining the first resource set corresponding to the number of transmissions includes:
determining two or more selectable resource sets based on available PRACH resources pre-allocated to the terminal; in which, different selectable resource sets correspond to different numbers of transmissions of the PRACH; and
determining, from the two or more selectable resource sets, a selectable resource set corresponding to the number of transmissions as the first resource set.

Optionally, the method further includes:
determining association information, in which, the association information is configured to divide the available PRACH resources to determine the two or more selectable resource sets.

Optionally, the association information indicates the number of resources included in each of the selectable resource sets.

Optionally, the association information indicates a division manner for dividing the available PRACH resources.

Optionally, the association information includes at least one of:
resource indexes comprised in the available PRACH resources;
a starting resource index for each of the selectable resource sets;
an ending resource index for each of the selectable resource sets; or
the number of resource indexes of each of the selectable resource sets.

Optionally, the association information includes set index values of the selectable resource sets corresponding to different numbers of transmissions.

Optionally, determining the association information includes at least one of:
determining the association information based on a protocol agreement; or
determining the association information based on indication information sent by the network side device.

Optionally, the method further includes:
receiving the indication information sent by the network side device via a first message.

Optionally, the first message is any one of:
a system information block (SIB) message;
downlink control information (DCI) for scheduling the SIB message; or
a radio resource control (RRC) reconfiguration signaling.

Optionally, the available PRACH resources include at least one of:
available preamble resources; or
available random access occasion (RO) resources.

Optionally, determining the number of transmissions of transmitting the PRACH to the network side device includes:
measuring a synchronization signal reference signal receiving power (RSRP) to obtain a measurement value; and
determining the number of transmissions based on the measurement value and at least one preset RSRP threshold.

Optionally, determining the number of transmissions based on the measurement value and the at least one preset RSRP threshold includes:
determining, from the at least one preset RSRP threshold, a first RSRP threshold greater than the measurement value and having a minimum difference with the measurement value; and
determining, based on preset numbers of transmissions corresponding to different RSRP thresholds, a preset number of transmission corresponding to the first RSRP threshold as the number of transmissions.

According to a second aspect of the present disclosure, a random access method is provided. The method is performed by a network side device and includes:
determining the number of transmissions of transmitting a physical random access channel (PRACH) indicated by a terminal;
determining a random access response (RAR) window based on the number of transmissions; and
sending an RAR message to the terminal within the RAR window.

Optionally, determining the number of transmissions of transmitting the PRACH indicated by the terminal includes:
determining two or more selectable resource sets based on available PRACH resources pre-allocated to the terminal; in which, different selectable resource sets correspond to different numbers of transmissions of the PRACH;
determining a first resource set corresponding to a PRACH resource used by the terminal; and
determining the number of transmissions corresponding to the first resource set.

Optionally, the method further includes:
determining association information, in which, the association information is configured to divide the available PRACH resources to determine the two or more selectable resource sets.

Optionally, the association information indicates a division manner for dividing the available PRACH resources.

Optionally, the association information includes at least one of:
resource indexes comprised in the available PRACH resources;
a starting resource index for each of the selectable resource sets;
an ending resource index for each of the selectable resource sets; or
the number of resource indexes of each of the selectable resource sets.

Optionally, the association information includes set index values of the selectable resource sets corresponding to different numbers of transmissions.

Optionally, determining the association information includes at least one of:
determining the association information based on a protocol agreement; or
determining the association information by the network side device.

Optionally, the method further includes:
sending to the terminal indication information for determining the association information.

Optionally, sending to the terminal the indication information for determining the association information includes:
sending to the terminal the indication information via a first message.

Optionally, the first message is any one of:
a system information block (SIB) message;
downlink control information (DCI) for scheduling the SIB message; or
a radio resource control (RRC) reconfiguration signaling.

Optionally, the available PRACH resources include at least one of:
available preamble resources; or
available random access occasion (RO) resources.

According to a third aspect of the present disclosure, a random access apparatus is provided. The apparatus is configured in a terminal and includes:
a first determining module, configured to determine the number of transmissions of transmitting a physical random access channel (PRACH) to a network side device;
an indication module, configured to indicate the number of transmissions to the network side device; and
an execution module, configured to start a random access response (RAR) window for receiving an RAR message when reaching a first time point, in which, the first time point is a time point after which the terminal has completed PRACH transmissions for the number of transmissions.

According to a fourth aspect of the present disclosure, a random access apparatus is provided. The apparatus is configured in a network side device and includes:
a second determining module, configured to determine the number of transmissions of transmitting a physical random access channel (PRACH) indicated by a terminal;
a third determination module, configured to determine a random access response (RAR) window based on the number of transmissions; and
a sending module, configured to send an RAR message to the terminal within the RAR window.

According to a fifth aspect of embodiments of the present disclosure, a computer-readable storage medium having a computer program stored thereon is provided. The computer program is configured to perform the random access method as described in any one of the terminal side.

According to a sixth aspect of embodiments of the present disclosure, a computer-readable storage medium having a computer program stored thereon is provided. The computer program is configured to perform the random access method as described in any one of the network side device side.

According to a seventh aspect of the present disclosure, a random access apparatus is provided. The apparatus includes:
a processor; and
a memory for storing instructions executable by the processor;
in which the processor is configured to perform the random access method as described in any one of the terminal side.

According to an eighth aspect of the present disclosure, a random access apparatus is provided. The apparatus includes:
a processor; and
a memory for storing instructions executable by the processor;
in which the processor is configured to perform the random access method as described in any one of the network side device side.

The solution provided in an embodiment of the present disclosure may include the following beneficial effects.

In embodiments of the present disclosure, after determining the number of transmissions of transmitting the PRACH to the network side device, the terminal may indicate the number of transmissions to the network side device, and further start the RAR window for receiving the RAR message when reaching the first time point, in which, the first time point is the time point after which the terminal has completed PRACH transmissions for the number of transmissions. In the present disclosure, by means of indicating the number of transmissions of transmitting the PRACH by the terminal to the network side device, it is ensured a consistent time point of starting the RAR window between the network side device and the terminal, a success rate of receiving RAR messages is improved and a success rate of random access is improved.

It should be noted that the foregoing general description and the following detailed description are exemplary and illustrative, and do not constitute a limitation on the present disclosure.

### BRIEF DESCRIPTION OF THE DRAWINGS

The accompanying drawings herein are incorporated into the specification and constitute a part of the specification, illustrate embodiments in conformity with embodiments of the present disclosure, and explain the principle of the present disclosure together with the specification.

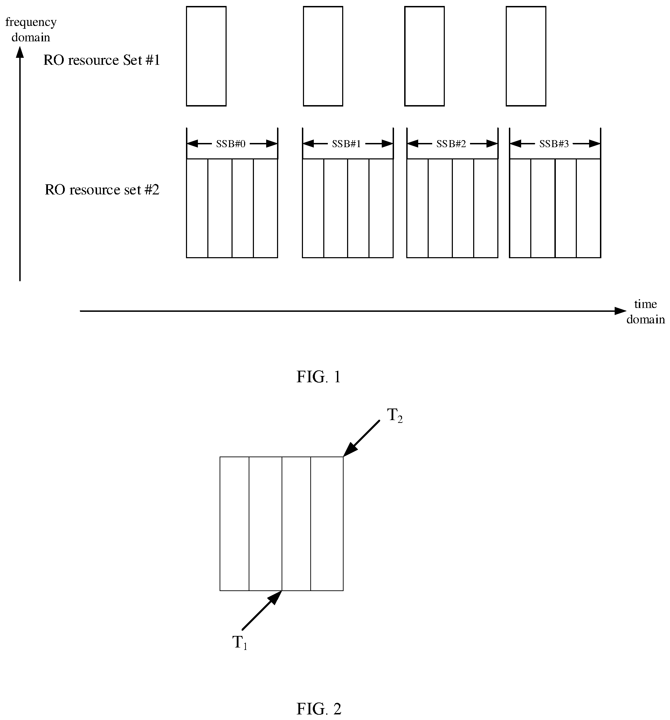

FIG. 1 is a schematic diagram illustrating a random access resource configuration method according to an embodiment.
FIG. 1 is a schematic diagram illustrating a scenario in which a terminal starts an RAR window according to an embodiment.
FIG. 3 is a flowchart illustrating a random access method according to an embodiment.
FIG. 4 is a flowchart illustrating a random access method according to an embodiment.
FIG. 5 is a flowchart illustrating a random access method according to an embodiment.
FIG. 6 is a flowchart illustrating a random access method according to an embodiment.
FIG. 7 is a flowchart illustrating a random access method according to an embodiment.
FIG. 8 is a flowchart illustrating a random access method according to an embodiment.
FIG. 9 is a flowchart illustrating a random access method according to an embodiment.
FIG. 10 is a block diagram illustrating a random access apparatus according to an embodiment.
FIG. 11 is a block diagram illustrating a random access apparatus according to an embodiment.
FIG. 12 is a schematic structural diagram illustrating a random access apparatus according to an embodiment of the present disclosure.
FIG. 13 is a schematic structural diagram illustrating a random access apparatus according to an embodiment of the present disclosure.

### DETAILED DESCRIPTION

The exemplary embodiments will be described in detail here, and examples thereof are shown in the accompanying drawings. When the following descriptions refer to the accompanying drawings, same numbers in different drawings represent same or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

The terms described in the present disclosure are only for the purpose of describing specific embodiments and are not intended to limit the present disclosure. The singular forms "a", "the" and "said" used in the disclosure and the attached claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in this disclosure to describe various information, such information shall not be limited to these terms. These terms are only used to distinguish the same category of information. For example, subject to the scope of this present disclosure, first information may also be referred to as second information, and similarly, and second information may also be referred to as first information. It depends on the context. For example, the word "if" as used herein may be interpreted as "upon" or "when" or "in response to determining".

In Release 18 (R18), for a physical random access channel (PRACH), effects such as PRACH coverage enhancement can be achieved by means of multiple PRACH transmissions to a network side device.

After completing multiple PRACH transmissions, the terminal may start receiving a random access response (RAR) message sent by the network side device. Time points at which the terminal starts receiving an RAR message are different for different numbers of PRACH transmissions. Since the number of PRACH transmissions is determined by the terminal, if the network device cannot determine the number of PRACHs sent by the terminal, it cannot determine a start time point at which the RAR message is sent to the terminal, which may lead to unreasonable RAR message scheduling.

For purposes such as PRACH coverage enhancement, it is proposed in R18 that multiple transmissions can be performed in a time domain. A possible resource configuration scheme can be shown in FIG. 1. In legacy PRACH and R18, multiple PRACH transmissions use independent random access occasion (PRACH occasion, RO) resource sets. For multiple PRACH transmissions, the same RO resource set can be shared between different numbers of PRACH transmissions. For example, in FIG. 1, version 16, version 17 communication terminals and communication terminals that do not perform PRACH repetition can use a resource in RO resource set #1 to transmit the PRACH, and communication terminals that perform PRACH repetition in version 18 can use a resource in RO resource set #2 to transmit the PRACH. In a case where the number of PRACH transmissions is 2, 4, or 8, etc., the resource in RO resource set #2 can be shared.

For multiple PRACH transmissions, the number of RAR windows and a start time can be determined using the following solution.

The RAR window is started after all PRACH transmissions are completed. That is, if the terminal determines that the number of PRACH transmissions is 4, then for the terminal, the RAR window may be started after a fourth transmission is completed. If the terminal determines that the number of PRACH transmissions is 8, then the RAR window may be started after an eighth PRACH transmission is completed.

As illustrated in FIG. 2, in response to the terminal determining that the number of PRACH transmissions is 2, the terminal starts the RAR window at T₁ time point after two transmissions and receives the RAR message sent by the network side device. In response to the terminal determining that the number of PRACH transmissions is 4, the terminal starts the RAR window at T₂ time point after four transmissions and receives the RAR message sent by the network side device.

In the above solution, the terminal can only start the RAR window at a fixed time domain position to receive the RAR message sent by the network side device.

It can be seen that for different numbers of PRACH transmissions, time points at which the terminal starts to receive the RAR message are different. A case where the network side device cannot determine the number of transmissions of the PRACH transmitted by the terminal may result in unreasonable RAR message scheduling. For example, as illustrated in FIG. 2, the terminal determines that the number of transmissions of the PRACH is 4, and starts the RAR window at T2 time point, while the network side device is likely to receive the PRACH transmitted by the terminal at T1 time point, and may send the RAR message to the terminal in a period between T1 and T2, causing misalignment of time points of starting the RAR window between the network side device side and the terminal, resulting in the terminal being unable to successfully receive the RAR message.

In order to solve the above technical problems, the present disclosure provides the following random access method and apparatus, and storage medium, which ensures a consistent time point of starting the RAR window between the network side device and the terminal, improves a success rate of receiving RAR messages, and improves a success rate of random access.

The following first introduces a random access method provided by the present disclosure from a terminal side.

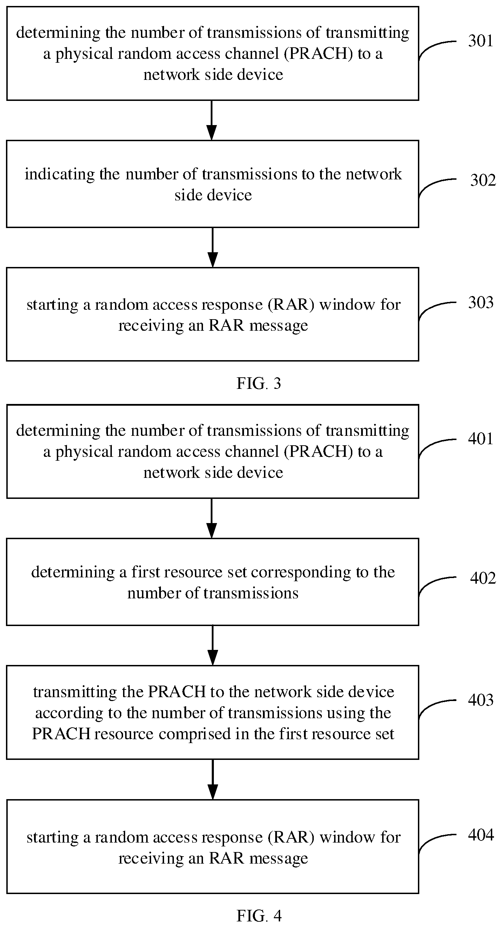

The present disclosure provides a random access method. As illustrated in FIG. 3, FIG. 3 is a flowchart illustrating a random access method according to an embodiment. The method may be performed by a terminal and may include the following steps.

At step 301, the number of transmissions of transmitting a physical random access channel (PRACH) to a network side device is determined.

In an embodiment of the present disclosure, the number of transmissions is determined by the terminal. In an example, the terminal may determine the number of transmissions in at least one of the following manners that: the terminal determines the number of transmissions by itself according to a parameter, or determines the number of transmissions according to a communication protocol, or determines the number of transmissions according to a pre-configuration, or determines the number of transmissions according to a configuration parameter on a network side, which is not limited in the present disclosure.

In a possible implementation, the terminal determines the number of transmissions based on the parameter may include that the terminal may determine the number of transmissions based on a synchronization signal reference signal receiving power (SS-RSRP) and one or more preset RSRP thresholds.

In an example, the terminal may measure the SS-RSRP to obtain a measurement value. Furthermore, a first RSRP threshold greater than the measurement value and having a minimum difference with the measurement value is determined from the at least one preset RSRP threshold. A preset number of transmission corresponding to the first RSRP threshold is determining as the number of transmissions, based on preset numbers of transmissions corresponding to different RSRP thresholds. For example, in a case where the RSRP threshold is specified in the communication protocol standard, the terminal determines the number of transmissions based on the parameter and the communication protocol. In a case where the RSRP threshold is preconfigured, the terminal determines the number of transmissions based on the parameter and the pre-configuration. In a case where the RSRP threshold is configured on the network side, the terminal determines the number of transmissions based on the parameter and the configuration parameter of the network side.

For example, the number of transmissions corresponding to RSRP threshold #1 is 8, the number of transmissions corresponding to RSRP threshold #2 is 4, the number of transmissions corresponding to RSRP threshold #3 is 2, where RSRP threshold #1 is less than RSRP threshold #2, RSRP threshold #2 is less than RSRP threshold #3, the measurement value is m, m is less than RSRP threshold #2 and RSRP threshold #3, and a difference between m and RSRP threshold #2 is the smallest. The terminal determines RSRP threshold #2 as the first RSRP threshold, and then determines the number of transmissions corresponding to RSRP threshold #2 as the number of transmissions, that is, the number of transmissions is 4.

In embodiments of the present disclosure, a timing for the terminal to measure the SS-RSRP is not limited.

In an example, the terminal may measure the SS-RSRP when transmitting the PRACH to the network side device for the first time. In another example, the terminal may measure the SS-RSRP when determining a demand of transmitting the PRACH to the network side device multiple times. In another example, the terminal may measure the SS-RSRP each time the PRACH repetition to the network side device is performed. The above is only an illustrative description, and the solution of determining the number of transmissions of transmitting the PRACH to the network side device based on the measurement value of the SS-RSRP and the preset RSRP threshold by the terminal should belong to the scope of protection of the present disclosure.

At step 302, the number of transmissions is indicated to the network side device by means of explicit indication or implicit indication.

In an embodiment of the present disclosure, the terminal may send indication information to the network side device to inform the network side device of the number of transmissions.

In a possible implementation, the terminal indicates the number of transmissions to the network side device by means of implicit indication. In an example, the terminal may implicitly indicate the number of transmissions to the network side device through a PRACH resource used. The specific implementation will be introduced in the embodiment shown in FIG. 4 and will not be introduced here. Of course, the terminal may also implicitly indicate the number of transmissions to the network side device in other manners, which is not limited in the disclosure.

In another possible implementation, the terminal may directly send indication information to the network side device to inform the network side device of the number of transmissions in an explicit manner. That is, the terminal sends a signaling to the network side device via uplink transmission to indicate the number of transmissions.

The above is only an illustrative description, and all solutions in which the terminal indicates the number of transmissions to the network side device should fall within the scope of protection of the present disclosure.

At step 303, a RAR window for receiving an RAR message is started.

In an embodiment of the present disclosure, the RAR window for receiving the RAR message may be started at a preset time point (e.g., a first time point).

For example, the first time point is a time point after which the terminal has completed PRACH transmissions for the number of transmissions, or the first time point is the time point after which the terminal has completed the PRACH transmissions for the number of transmissions plus (+) T. A duration of T may be determined by a protocol agreement or the network side device, which is not limited in the disclosure.

In all embodiments of the present disclosure, "RAR window" refers to a time range for receiving the RAR message; and "starting a RAR window" may refer to starting to calculate a time range for receiving the RAR message.

In an example, the number of transmissions is 2, and the terminal takes the time point at which two PRACH transmissions are completed as the first time point. The RAR window is started when reaching a first time point, thus listening to and receiving the RAR message sent by the network device side within the RAR window.

In an example, the number of transmissions is 2, and in the protocol agreement the duration of T corresponds to n slots. The time point at which the terminal completes 2 PRACH transmissions is the m-th slot. The terminal takes the (m+n) slot as the first time point. The RAR window is started when reaching a first time point, thus listening to and receiving the RAR message sent by the network device side within the RAR window.

In this embodiment of the present disclosure, the RAR message includes, but is not limited to, message 2 (Message2, Msg2) in the four-step random access procedure, or message B (MessageB, MsgB) in the two-step random access procedure.

In the above embodiment, the terminal explicitly or implicitly indicates to the network side device the number of transmissions of the PRACH transmitted by the terminal, which may ensure the network side device and the terminal to start the corresponding RAR window, improve a success rate of receiving the RAR message, and improve a success rate of random access. In the an embodiment of the present disclosure, the network side device and the terminal starting the corresponding RAR window means that the RAR windows of the network side device and the terminal are completely consistent, or partially overlap (taking into account transmission delay).

In some optional embodiments, as illustrated in FIG.4, FIG. 4 is a flowchart illustrating a random access method according to an embodiment. The method may be performed by a terminal and may include the following steps.

At step 401, the number of transmissions of transmitting a physical random access channel (PRACH) to a network side device is determined.

In an embodiment of the present disclosure, the method for determining the number of transmissions can refer to step 301 and will not be repeated here.

At step 402, a first resource set corresponding to the number of transmissions is determined.

In an embodiment of the present disclosure, a PRACH resource included in the first resource set is configured to indicate the number of transmissions to the network side device.

In a possible implementation, available PRACH resources pre-allocated to the terminal by the network side device may be divided to obtain two or more selectable resource sets. Different selectable resource sets correspond to different numbers of transmissions of the PRACH. The terminal may determine, from the two or more selectable resource sets, a selectable resource set corresponding to the number of transmissions as the first resource set.

In an example, the available PRACH resources may include, but are not limited to, at least one of available preamble resources; or available random access occasion (RO) resources.

The available RO resources herein may be RO resources shared by multiple PRACH transmissions, such as RO resource set #2 shown in FIG. 1.

For example, the available preamble resources include preamble #1, preamble #2, ..., preamble #21, where preamble #1 to preamble #7 are selectable resource set #1, and the corresponding number of transmissions of the PRACH is 2, preamble #8 to preamble #14 are selectable resource set #2, and the corresponding number of transmissions of the PRACH is 4, and preamble #15 to preamble #21 are selectable resource set #3, and the corresponding number of transmissions of the PRACH is 8. In response to the number of transmissions determined by the terminal being 4, the terminal determines selectable resource set #2 as the first resource set, and the first resource set includes {preamble #8, preamble #9, ..., preamble #14}.

For another example, the available RO resources include RO#1, RO#2, ..., RO#12, where RO#1 to RO#4 are selectable resource set #1, and the corresponding number of transmissions of the PRACH is 2, RO#5 to RO#8 are selectable resource set #2, and the corresponding number of transmissions of the PRACH is 4, and RO#9 to RO#12 are selectable resource set #3, and the corresponding number of transmissions of the PRACH is 8. In response to the number of transmissions determined by the terminal being 4, the terminal determines selectable resource set #2 as the first resource set, and the first resource set includes {RO#5, RO#6, RO#7, RO#8}.

It is noted that the available RO resources include, but are not limited to, at least one of: available RO time domain resources; available RO frequency domain resources; or available RO time-frequency domain resources.

At step 403, the PRACH is transmitted to the network side device according to the number of transmissions using the PRACH resource comprised in the first resource set.

For example, the first resource set includes {preamble#8, preamble#9, ..., preamble#14}, the terminal transmits preamble#8 to the network side device, and transmits the PRACH, that is, the number of transmissions of transmitting preamble#8 is 4.

For another example, the first resource set includes {RO#5, RO#6, RO#7, RO#8}, and the terminal may use a time domain resource and/or a frequency domain resource corresponding to RO#6 to transmit the PRACH to the network side device, and the number of transmissions of transmitting the PRACH is 4.

At step 404, a RAR window for receiving an RAR message is started.

In this embodiment of the present disclosure, the method of starting the RAR window for receiving the RAR message may refer to step 303, which will not be described in detail herein.

In the above embodiment, the terminal indicate to the network device the number of transmissions of the PRACH transmitted the terminal in an implicit manner through the PRACH resource used, which may ensure the network side device and the terminal to enable the corresponding RAR window, improve a success rate of receiving the RAR message, and improve a success rate of random access.

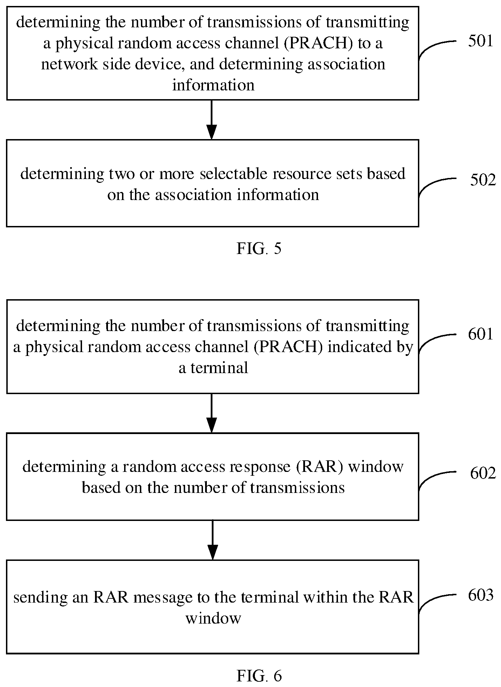

In some optional embodiments, as illustrated in FIG.5, FIG. 5 is a flowchart illustrating a random access method according to an embodiment. The method may be performed by a terminal. The process of dividing the available PRACH resources to obtain different selectable resource sets corresponding to different numbers of transmissions of the PRACH may include the following steps.

At step 501, the number of transmissions of transmitting a physical random access channel (PRACH) to a network side device is determined, and association information is determined.

In an embodiment of the present disclosure, the method of determining the number of transmissions is similar to step 301 and will not be repeated here.

In an embodiment of the present disclosure, the available PRACH resources allocated to the terminal may be divided to obtain two or more selectable resource sets. Different selectable resource sets correspond to different numbers of transmissions of the PRACH. The terminal may determine, from the two or more selectable resource sets, a selectable resource set corresponding to the number of transmissions as the first resource set.

In some embodiments, the association information is configured to divide the available PRACH resources allocated by the base station to the terminal.

The available PRACH resources may include, but are not limited to, at least one of: available preamble resources; available RO resources. The available RO resources may include, but are not limited to, at least one of: available RO time domain resources; available RO frequency domain resources; available RO time-frequency domain resources.

In a possible implementation, the association information may be determined based on a protocol agreement. Alternatively, the association information may be determined based on indication information sent by the network side device. Alternatively, the association information may be determined based on both the protocol agreement and the indication information sent by the network side device, which is not limited in the present disclosure.

In a case where the association information is determined based on at least the indication information sent by the network side device, the terminal may receive the indication information sent by the network side device via a first message. The first message may be any one of: a system information block (SIB) message; downlink control information (DCI) for scheduling the SIB message; a radio resource control (RRC) reconfiguration signaling; or other DCI signaling.

The first message may be SIB 1 or other SIB messages, such as SIBn, where n is a positive integer.

Accordingly, the first message may be a DCI for scheduling the SIB 1, or may also be a DCI for scheduling the SIBn.

In a possible implementation, the association information may be used to indicate the number of resources included in each of the selectable resource sets.

In an example, the association information may be used to indicate the number of available preambles included in each of the selectable resource sets.

In an example, the association information may be used to indicate the number of available RO resources included in each of the selectable resource sets. For example, the association information may be used to indicate the number of available RO time domain resources and/or the number of available RO frequency domain resources included in each of the selectable resource sets.

In another possible implementation manner, the association information is used to indicate a division manner for dividing the available PRACH resources.

In an example, the association information may be used to indicate a division manner for dividing the available preamble resources.

In an example, the association information may be used to indicate a division manner for dividing the available RO resources, and the available RO resources include, but are not limited to, the available RO time domain resources and/or the available RO frequency domain resources.

In an example, the division manner may include, but is not limited to, the following manners: an equal division manner; a manner of sequentially increasing by the number of first resources; a manner of sequentially decreasing by the number of second resources; a manner of dividing in a specified resource number ratio.

The equal division manner refers to dividing the available PRACH resources equally into two or more selectable resource sets. The manner of sequentially increasing by the number of first resources refers to increasing the number of specified resources for each selectable resource set relative to the previous selectable resource set. The manner of sequentially decreasing by the number of second resources refers to reducing the number of specified resources for each selectable resource set relative to the previous selectable resource set. The manner of dividing in a specified resource number ratio refers to dividing all available PRACH resources according to the specified resource number ratio.

In another possible implementation, the association information may include, but is not limited to, at least one of: resource indexes included in the available PRACH resources; a starting resource index for each of the selectable resource sets; an ending resource index for each of the selectable resource sets; or the number of resource indexes of each of the selectable resource sets.

The resource indexes included in the available PRACH resources may include: available preamble code indexes; and available RO resource indexes.

In another possible implementation manner, the association information may include set index values of the selectable resource sets corresponding to different numbers of transmissions.

In another possible implementation manner, the association information may also indicate an ending resource index corresponding to each segment in a case where all available PRACH resources are segmented.

In another possible implementation manner, the association information may include a combination of at least two of the above contents.

In an example, the starting resource index for each of the selectable resource sets may be provided by a protocol agreement, and the network side device sends indication information indicating the ending resource index for each of the selectable resource sets, or the number of resource indexes of each of the selectable resource sets.

In an example, the starting resource index and the ending resource index for each of the selectable resource sets may be provided by a protocol agreement, and the network side device may send indication information indicating the resource indexes included in the available PRACH resources. Of course, the indication information sent by the network side device may also indicate the set index values of the selectable resource sets corresponding to different numbers of transmissions.

The above is only an illustrative description. In actual applications, the available PRACH resources pre-allocated to the terminal are divided according to the protocol agreement and/or a manner indicated by the network side device to obtain two or more selectable resource sets, so that all solutions of making different selectable resource sets corresponding to different numbers of transmissions of the PRACH should fall within the scope of protection of the disclosure.

The above is only an illustrative description, the association information which is used to divide the available PRACH resources causing different selectable resource sets corresponding to different numbers of transmissions of the PRACH should fall within the scope of protection of the present disclosure.

At step 502, two or more selectable resource sets are determined based on the association information.

In an embodiment of the present disclosure, different selectable resource sets correspond to different numbers of transmissions of the PRACH. In this way, the network side device may determine the numbers of transmissions of the PRACH according to the selectable resource set corresponding to the PRACH transmission received.

The number of transmissions corresponding to each of the selectable resource sets may be provided by a protocol agreement or indicated by the network side device.

In an example, it may be provided in the protocol agreement that the number of transmissions corresponding to the selectable resource sets in an order of set index values from small to large or from large to small are 2, 4, 8, and the like.

In an example, the network side device may send the indication information to indicate the number of transmissions corresponding to the index value of each selectable resource set.

In a possible implementation, the association information may be used to indicate the number of resources included in each of the selectable resource sets.

For example, the association information is used to indicate that the numbers of resources included in respective selectable resource sets are 2, 2, and 3, respectively, and the number of transmissions corresponding to the selectable resource sets in an order of indexes are 2, 4, and 8, respectively. The available PRACH resources are divided based on the association information, and the obtained multiple selectable resource sets include selectable resource set #1 {RO resource #1, RO resource #2}, selectable resource set #2 {RO resource #3, RO resource #4}, and selectable resource set #3 {RO resource #5, RO resource #6, RO resource #7}.

In a possible implementation, in a case where the number of resources included in each of the selectable resource sets is the same, the association information may indicate one number of resources, where the number of resources is the number of resources included in each of the selectable resource sets.

For example, the association information indicates that the number of resources included in each selectable resource set is 2, and the number of transmissions corresponding to the selectable resource sets in an order of indexes are 2, 4, and 8, respectively. The available PRACH resources are divided based on the association information, and the obtained multiple selectable resource sets include selectable resource set #1 {RO resource #1, RO resource #2}, selectable resource set #2 {RO resource #3, RO resource #4}, and selectable resource set #3 {RO resource #5, RO resource #6}.

In another possible implementation, the association information indicate a division manner for dividing the available PRACH resources.

In an example, the division manner may include, but is not limited to, the following manners: an equal division manner; a manner of sequentially increasing by the number of first resources; a manner of sequentially decreasing by the number of second resources; a manner of dividing in a specified resource number ratio.

For example, the available PRACH resources include 8 available preambles, and the equal division manner may refer to equally dividing the 8 available preambles. Assumed that the possible numbers of transmissions include 2, 4, 8, and 16, the 8 available preambles may be evenly divided into 4 groups, and each selectable resource set includes 2 available preambles, which respectively correspond to the above numbers of transmissions.

For example, the available PRACH resources include 18 available RO resources, the first number of resources may be 1, and assumed that the possible numbers of transmissions include 16, 8, 4, and 2, the 18 available RO resources may be divided into 4 groups in a manner of sequentially increasing by a specified number of resources. Each selectable resource set includes 3, 4, 5, and 6 available RO resources, respectively, corresponding to the above numbers of transmissions, respectively.

For example, the available PRACH resources include 20 available preamble resources, and the second number of resources may be 2. Assumed that the possible numbers of transmissions include 2, 4, 8, and 16, the 20 available preamble resources may be divided into 4 groups in a manner of sequentially descending by a specified number of resources. The 4 selectable resource sets include 8, 6, 4, and 2 available preamble resources, respectively, which correspond to the above numbers of transmissions, respectively.

For example, the possible numbers of transmissions include 2, 4, and 8, and the specified resource number ratio is 1:2:4. Assumed that the available PRACH resources include 21 available RO resources, the 21 RO resources may be divided into 3 groups according to the manner of dividing in specified resource number ratio. The 3 selectable resource sets include 3, 6, and 12 available RO resources, respectively, which correspond to the above numbers of transmissions.

The above is only an exemplary description. In actual applications, the available PRACH resources are divided according to the association information, and all solutions in which the association information is used to indicate the division manner should fall within the scope of protection of the present disclosure.

In another possible implementation, the association information may include, but is not limited to, at least one of: resource indexes included in the available PRACH resources; a starting resource index for each of the selectable resource sets; an ending resource index for each of the selectable resource sets; or the number of resource indexes of each of the selectable resource sets.

The resource indexes included in the available PRACH resources may include: available preamble indexes; and available RO resource indexes.

Taking the available PRACH resources including the available RO resources as an example, one corresponding index may be determined for each available RO. Optionally, the index value may be periodically reused. The available RO index value may be configured by the network side device, which is not limited in the present disclosure.

In an example, on available RO resource index may be configured for each number of transmissions.

For example, the number 2 of transmissions corresponds to available RO resource index 1, the number 4 of transmissions corresponds to available RO resource index 2, and so on.

In an example, two or more available RO resource indexes may be configured for each number of transmissions.

For example, the number 2 of transmissions corresponds to available RO resource indexes 1 and 2, the number 4 of transmissions corresponds to available RO resource indexes 3 and 4, and so on.

In an example, at least two of the starting resource index, the ending resource index and the number of resource indexes of the corresponding selectable resource set may be configured for each number of transmissions.

For example, a starting resource index and an ending resource index for corresponding selectable resource set #1 may be configured for the number of transmissions, 2, where the starting resource index for the selectable resource set #1 is available RO resource index 1, and the ending resource index for the selectable resource set #1 is available RO resource index 4. Then the selectable resource set #1 corresponding to the number of transmissions, 2, includes {RO resource #1, RO resource #2, RO resource #3, RO resource #4}.

For another example, a starting resource index and the number of resource indexes of corresponding selectable resource set #2 may be configured for the number of transmissions, 4, where the starting resource index for the selectable resource set #2 is available RO resource index 5, and the number of resource indexes is 2, then the selectable resource set #2 corresponding to the number of transmissions, 4, includes {RO resource #5, RO resource #6}.

For another example, an ending resource index and the number of resource indexes of corresponding selectable resource set #3 may be configured to the number of transmission, 8, where the ending resource index for the selectable resource set #3 is available RO resource index 9, and the number of resource indexes is 3. Then the selectable resource set #3 corresponding to the number of transmissions, 8, includes {RO resource #7, RO resource #8, RO resource #9}.

In an example, all available RO resource indexes may also be segmented, and the association information indicates an ending resource index corresponding to each segment.

For example, the association information indicates that ending resource indexes corresponding to respective segments are 2, 5, and 8 respectively. The terminal determines that selectable resource set #1 corresponding to the number of transmissions, 2, includes {RO resource #1, RO resource #2}, selectable resource set #2 corresponding to the number of transmissions, 4, includes {RO resource #3, RO resource #4, RO resource #5}, and selectable resource set #3 corresponding to the number of transmissions, 8, includes {RO resource #6, RO resource #7, RO resource #8}.

The above is only an illustrative description. In actual applications, the solution of dividing the available PRACH resources causing different selectable resource sets corresponding to different numbers of transmissions of the PRACH should all fall within the scope of protection of the present disclosure.

In the above embodiment, the terminal may determine the selectable resource set corresponding to the number of transmissions based on the association information, and different selectable resource sets correspond to different numbers of transmissions of the PRACH. The association information may be determined in a variety of manner. It is ensured that the terminal may indicate the number of transmissions of transmitting the PRACH to the network side device through the PRACH resource used, thus improving a success rate of receiving an RAR message and a success rate of random access.

Of course, the embodiment illustrated in FIG. 5 can be implemented alone or in combination with other embodiments of the present disclosure; for example, can be implemented in combination with the embodiments illustrated in FIG. 3 or FIG. 4.

Then a random access method provided by the present disclosure will be introduced from a network side device below. It should be noted that the limitation on the network side device can refer to the embodiments illustrated in the previous FIGs. 3, 4 or 5, and will not be repeated here.

An embodiment of the present disclosure provides a random access method. As illustrated in FIG. 6, FIG. 6 is a flowchart illustrating a random access method according to an embodiment. The method may be performed by a network side device, the network side device includes, but is not limited to, a base station, and the method may include the following steps.

At step 601, the number of transmissions of transmitting a physical random access channel (PRACH) indicated by a terminal is determined.

In an embodiment of the present disclosure, the number of transmissions is determined by the terminal. The specific determination manner is not limited in embodiments of the present disclosure, for example, may be as step 301. The network side device may determine the number of transmissions according to an instruction of the terminal.

In a possible implementation, the network side device determines the number of transmissions indicated by the terminal in an implicit manner. For details, reference can be made to introduction of the embodiment shown in FIG. 4/FIG. 5, which will not be described in detail here.

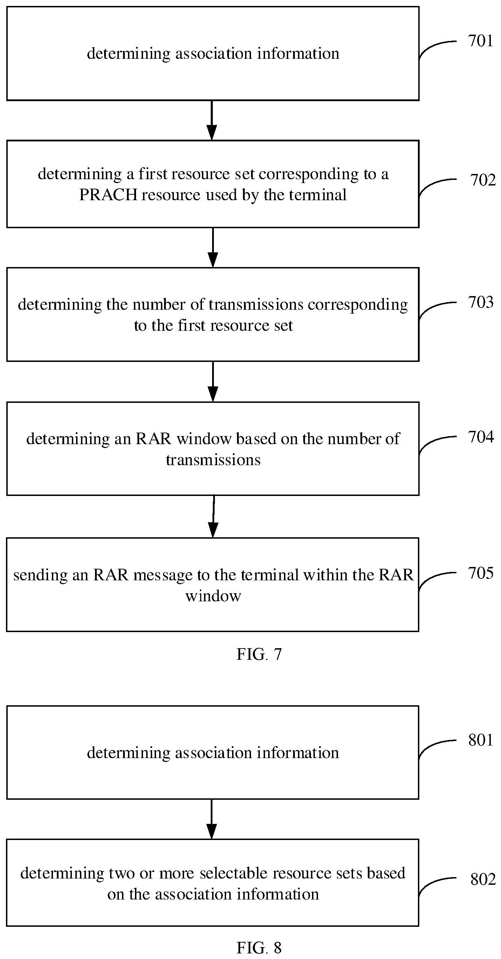

In an example, the network side device may also determine the PRACH resource used by the terminal, thereby determining the number of transmissions. The specific implementation will be introduced in the embodiment shown in FIG. 7 and will not be introduced here.

In another possible implementation, the network side device may also determine the number of transmissions indicated by the terminal in an explicit manner. For details, reference can be made to introduction of the embodiment on the terminal side, which will not be repeated here.

The above is only an illustrative description, and all solutions in which the network side device determines the number of transmissions according to the indication of the terminal should fall within the scope of protection of the present disclosure.

At step 602, a random access response (RAR) window is determined based on the number of transmissions. The RAR window of the network side device corresponds to the RAR window of the terminal.

Specifically, the network side device may determine a first time point for starting the RAR window according to the number of transmissions, and the RAR window of the network side device corresponds to the RAR window of the terminal.

The manner in which the terminal determines the first time point for starting the RAR window for receiving the RAR message can refer to the embodiment shown in FIG.3, which will not be repeated here. It should be noted that transmission of the RAR message can be synchronized as long as the network side device and the terminal device determine the first time point for starting the RAR window in the same manner.

In this embodiment of the present disclosure, the network side device may determine the first time point according to the number of transmissions. The network side device is synchronized with the terminal by sending a synchronization signal block in advance. Further, the network side device may takes the time point at which the terminal completes the PRACH transmission for the number of transmissions as the first time point, or the first time point is the time point after which the terminal has completed the PRACH transmissions for the number of transmissions plus (+) T. A duration of T may be determined by a protocol agreement or determined by the network side device and notified to the terminal, which is not limited in the disclosure.

In an example, the terminal transmits PRACHs for the number of transmissions, and the network side device may determine an order of at least one PRACH received in the PRACHs with the number of transmissions. For example, the network side device receives the PRACH transmitted by the terminal for the second time in four continuous PRACH transmissions. Further, the network side device may determine that the terminal needs to transmit the PRACH twice more, thus taking the time point at which the terminal completes the PRACH transmission for the number of transmissions as the first time point.

The above is only an illustrative description. In actual applications, the solutions of the network side device determining the first time point according to the received PRACH and the number of transmissions should fall within the scope of protection of the present disclosure.

At step 603, an RAR message is sent to the terminal within the RAR window.

In an embodiment of the present disclosure, the network side device determines that the terminal has opened the RAR window when reaching the first time point. At this time, the network side device may send the RAR message to the terminal within the RAR window, for example, at the first time point or a second time point after the first time point and within the RAR window. The RAR message includes, but is not limited to, message 2 (Message 2, Msg 2) in the four-step random access procedure, or message B (Message B, Msg B) in the two-step random access procedure.

In the above embodiment, the network side device may determine the number of transmissions of the terminal transmitting the PRACH according to the indication of the terminal, and start the RAR window for transmitting the RAR message at the first time point. In this way, it may ensure the time points at which the network side device and the terminal start the RAR window to be synchronized, and a success rate of receiving the RAR message may be improved and a success rate of random access may be improved.

In some optional embodiments, as illustrated in FIG. 7, FIG. 7 is a flowchart illustrating a random access method according to an embodiment. The method may be performed by a network side device, and may include the following steps:

At step 701, association information is determined. The association information is used to divide available PRACH resources allocated to the terminal into two or more selectable resource sets. Different selectable resource sets correspond to different numbers of transmissions of the PRACH transmitted by the terminal. In an example, the available PRACH resources may include, but are not limited to, at least one of: available preamble resources; or available RO resources.

The available RO resources include, but are not limited to, at least one of: available RO time domain resources; available RO frequency domain resources; or available RO time-frequency domain resources.

At step 702, a first resource set corresponding to a PRACH resource used by the terminal is determined.

In an embodiment of the present disclosure, the network side device may determine the first resource set corresponding to the PRACH resource that corresponds to the received PRACH.

For example, the network side device receives preamble #8, and the network side device determines that preamble #8 belongs to selectable resource set #2, then the selectable resource set #2 is the first resource set.

At step 703, the number of transmissions corresponding to the first resource set is determined.

The number of transmissions corresponding to the first resource set is determined based on the numbers of transmissions of the PRACH corresponding to different selectable resource sets.

For example, the first resource set is selectable resource set #2, and the corresponding number of transmissions of the PRACH is 4, then the network side device determines that the number of transmissions is 4.

At step 704, an RAR window is determined based on the number of transmissions. The RAR window of the network side device corresponds to the RAR window of the terminal.

For details, reference can be made to step 602 in the embodiment shown in FIG. 6, which will not be repeated here.

At step 705, a RAR message is sent to the terminal within the RAR window.

For details, reference can be made to step 603, which will not be repeated here.

In the above embodiment, the network side device may determine the number of transmissions of transmitting the PRACH by the terminal according to the PRACH resource used by the terminal to transmit the PRACH, so as to start the RAR window for receiving the RAR message when reaching the first time point, and the first time point is the time point after which the terminal has completed the PRACH transmission for the number of transmissions. It may be ensured that the time points at which the network side device and the terminal start the RAR window are consistent, a success rate of receiving the RAR message may be improved and a success rate of random access may be improved.

In some optional embodiments, as illustrated in FIG.8, FIG. 8 is a flowchart illustrating a random access method according to an embodiment. The method may be performed by a network side device. The process of dividing the available PRACH resources to obtain different selectable resource sets corresponding to different numbers of transmissions of the PRACH may include the following steps.

At step 801, association information is determined.

In an embodiment of the present disclosure, the association information is configured to divide the available PRACH resources allocated to the terminal to determine a plurality of selectable resource sets. Specifically, with reference to the description of step 501 in the embodiment shown in FIG. 5, the network side device may determine the selectable resource set corresponding to each number of transmissions based on the same or corresponding manner. Different selectable resource sets correspond to different numbers of transmissions of the PRACH. The terminal may determine, from the two or more selectable resource sets, a selectable resource set corresponding to the number of transmissions as the first resource set. After receiving the PRACH transmission, the network side device may determine the number of transmissions of the PRACH.

The available PRACH resources may include, but are not limited to, at least one of: available preamble resources; available RO resources. The available RO resources may include, but are not limited to, at least one of: available RO time domain resources; available RO frequency domain resources; available RO time-frequency domain resources.

In a possible implementation, the association information may be determined based on a protocol agreement. Alternatively, the association information may be determined by a base station, and further, the base station may send indication information to the terminal, to inform the terminal of the association information. Alternatively, the association information may be determined based on both the protocol agreement and the base station, which is not limited in the present disclosure.

In a case where the association information is determined by the base station, the base station may send the indication information to the terminal via a first message. The first message may be any one of: a system information block (SIB) message; downlink control information (DCI) for scheduling the SIB message; a radio resource control (RRC) reconfiguration signaling; or other DCI signaling, which is not limited in the present disclosure.

The first message may be SIB 1 or other SIB messages, such as SIBn, where n is a positive integer.

Accordingly, the first message may be a DCI for scheduling the SIB 1, or may also be a DCI for scheduling the SIBn.

In a possible implementation, the association information may be used to indicate the number of resources included in each of the selectable resource sets.

In an example, the association information may be used to indicate the number of available preambles included in each of the selectable resource sets.

In an example, the association information may be used to indicate the number of available RO resources included in each of the selectable resource sets. For example, the association information may be used to indicate the number of available RO time domain resources and/or the number of available RO frequency domain resources included in each of the selectable resource sets.

In another possible implementation manner, the association information is used to indicate a division manner for dividing the available PRACH resources.

In an example, the association information may be used to indicate a division manner for dividing the available preamble resources.

In an example, the association information may be used to indicate a division manner for dividing the available RO resources, and the available RO resources include, but are not limited to, the available RO time domain resources and/or the available RO frequency domain resources.

In an example, the division manner may include, but is not limited to, the following manners: an equal division manner; a manner of sequentially increasing by the number of first resources; a manner of sequentially decreasing by the number of second resources; a manner of dividing in a specified resource number ratio.

The equal division manner refers to dividing the available PRACH resources equally into two or more selectable resource sets. The manner of sequentially increasing by the number of first resources refers to increasing the number of specified resources for each selectable resource set relative to the previous selectable resource set. The manner of sequentially decreasing by the number of second resources refers to reducing the number of specified resources for each selectable resource set relative to the previous selectable resource set. The manner of dividing in a specified resource number ratio refers to dividing all available PRACH resources according to the specified resource number ratio.

In another possible implementation, the association information may include, but is not limited to, at least one of: resource indexes included in the available PRACH resources; a starting resource index for each of the selectable resource sets; an ending resource index for each of the selectable resource sets; or the number of resource indexes of each of the selectable resource sets.

The resource indexes included in the available PRACH resources may include: available preamble code indexes; and available RO resource indexes.

In another possible implementation manner, the association information may include set index values of the selectable resource sets corresponding to different numbers of transmissions.

In another possible implementation manner, the association information may also indicate an ending resource index corresponding to each segment in a case where all available PRACH resources are segmented.

In another possible implementation manner, the association information may include a combination of at least two of the above contents.

In an example, the starting resource index for each of the selectable resource sets may be provided by a protocol agreement, and the base station determines to send the ending resource index for each of the selectable resource sets, or the number of resource indexes of each of selectable resource sets. Furthermore, the base station sends indication information to the terminal, and the indication information indicate the ending resource index for each of the selectable resource sets, or the number of resource indexes of each of the selectable resource sets.

In an example, the starting resource index and the ending resource index for each of the selectable resource sets may be provided by a protocol agreement, and the base station determines the resource indexes included in the available PRACH resources. Further, the base station sends indication information to the terminal, and the indication information indicates the resource indexes included in the available PRACH resources. Of course, the base station may also determine the set index values of the selectable resource sets corresponding to different numbers of transmissions, and further, the base station sends indication information to the terminal to indicate the set index values of the selectable resource sets corresponding to different numbers of transmissions.

The above is only an illustrative description. In actual applications, the available PRACH resources pre-allocated to the terminal are divided according to the protocol agreement and/or a manner determined by the base station to obtain two or more selectable resource sets, so that all solutions of making different selectable resource sets corresponding to different numbers of transmissions of the PRACH should fall within the scope of protection of the disclosure

The above is only an illustrative description, the association information which is used to divide the available PRACH resources causing different selectable resource sets corresponding to different numbers of transmissions of the PRACH should fall within the scope of protection of the present disclosure.

At step 802, two or more selectable resource sets are determined based on the association information.

In an embodiment of the present disclosure, different selectable resource sets correspond to different numbers of transmissions of the PRACH.

The number of transmissions corresponding to each of the selectable resource sets may be provided by a protocol agreement or determined by the base station.

In an example, it may be provided in the protocol agreement that the number of transmissions corresponding to the selectable resource sets in an order of set index values from small to large or from large to small are 2, 4, 8, and the like.

In an example, the base station may send the indication information to indicate the number of transmissions corresponding to the index value of each selectable resource set.

In a possible implementation, the association information may be used to indicate the number of resources included in each of the selectable resource sets.

For example, the association information is used to indicate that the numbers of resources included in respective selectable resource sets are 2, 2, and 3, respectively, and the number of transmissions corresponding to the selectable resource sets in an order of indexes are 2, 4, and 8, respectively. The available PRACH resources are divided based on the association information, and the two or more selectable resource sets obtained include selectable resource set #1 {RO resource #1, RO resource #2}, selectable resource set #2 {RO resource #3, RO resource #4}, and selectable resource set #3 {RO resource #5, RO resource #6, RO resource #7}.

In another possible implementation, the association information indicate a division manner for dividing the available PRACH resources.

In an example, the division manner may include, but is not limited to, the following manners: an equal division manner; a manner of sequentially increasing by the number of first resources; a manner of sequentially decreasing by the number of second resources; a manner of dividing in a specified resource number ratio.

For example, the available PRACH resources include 8 available preambles, and the equal division manner may refer to equally dividing the 8 available preambles. Assumed that the possible numbers of transmissions include 2, 4, 8, and 16, the 8 available preambles may be evenly divided into 4 groups, and each selectable resource set includes 2 available preambles, which respectively correspond to the above numbers of transmissions.

For example, the available PRACH resources include 18 available RO resources, the first number of resources may be 1, and assumed that the possible numbers of transmissions include 16, 8, 4, and 2, the 18 available RO resources may be divided into 4 groups in a manner of sequentially increasing by a specified number of resources. Each selectable resource set includes 3, 4, 5, and 6 available RO resources, respectively, corresponding to the above numbers of transmissions, respectively.

For example, the available PRACH resources include 20 available preamble resources, and the second number of resources may be 2. Assumed that the possible numbers of transmissions include 2, 4, 8, and 16, the 20 available preamble resources may be divided into 4 groups in a manner of sequentially descending by a specified number of resources. The 4 selectable resource sets include 8, 6, 4, and 2 available preamble resources, respectively, which correspond to the above numbers of transmissions, respectively.

For example, the possible numbers of transmissions include 2, 4, and 8, and the specified resource number ratio is 1:2:4. Assumed that the available PRACH resources include 21 available RO resources, the 21 RO resources may be divided into 3 groups according to the manner of dividing in specified resource number ratio. The 3 selectable resource sets include 3, 6, and 12 available RO resources, respectively, which correspond to the above numbers of transmissions.

The above is only an exemplary description. In actual applications, the available PRACH resources are divided according to the association information, and all solutions in which the association information is used to indicate the division manner should fall within the scope of protection of the present disclosure.

In another possible implementation, the association information may include, but is not limited to, at least one of: resource indexes included in the available PRACH resources; a starting resource index for each of the selectable resource sets; an ending resource index for each of the selectable resource sets; or the number of resource indexes of each of the selectable resource sets.

The resource indexes included in the available PRACH resources may include: available preamble indexes; and available RO resource indexes.

Taking the available PRACH resources including the available RO resources as an example, one corresponding index may be determined for each available RO. Optionally, the index value may be periodically reused. The available RO index value may be configured by the base station, which is not limited in the present disclosure.

In an example, one available RO resource index may be configured for each number of transmissions.

For example, the number 2 of transmissions corresponds to available RO resource index 1, the number 4 of transmissions corresponds to available RO resource index 2, and so on.

In an example, two or more available RO resource indexes may be configured for each number of transmissions.

For example, the number 2 of transmissions corresponds to available RO resource indexes 1 and 2, the number 4 of transmissions corresponds to available RO resource indexes 3 and 4, and so on.

In an example, at least two of the starting resource index, the ending resource index and the number of resource indexes of the corresponding selectable resource set may be configured for each number of transmissions.

For example, a starting resource index and an ending resource index for corresponding selectable resource set #1 may be configured for the number of transmissions, 2, where the starting resource index for the selectable resource set #1 is available RO resource index 1, and the ending resource index for the selectable resource set #1 is available RO resource index 4. Then the selectable resource set #1 corresponding to the number of transmissions, 2, includes {RO resource #1, RO resource #2, RO resource #3, RO resource #4}.

For another example, a starting resource index and the number of resource indexes of corresponding selectable resource set #2 may be configured for the number of transmissions, 4, where the starting resource index for the selectable resource set #2 is available RO resource index 5, and the number of resource indexes is 2, then the selectable resource set #2 corresponding to the number of transmissions, 4, includes {RO resource #5, RO resource #6}.

For another example, an ending resource index and the number of resource indexes of corresponding selectable resource set #3 may be configured to the number of transmission, 8, where the ending resource index for the selectable resource set #3 is available RO resource index 9, and the number of resource indexes is 3. Then the selectable resource set #3 corresponding to the number of transmissions, 8, includes {RO resource #7, RO resource #8, RO resource #9}.

In an example, all available RO resource indexes may also be segmented, and the association information indicates an ending resource index corresponding to each segment.

For example, the association information indicates that ending resource indexes corresponding to respective segments are 2, 5, and 8 respectively. The terminal determines that selectable resource set #1 corresponding to the number of transmissions, 2, includes {RO resource #1, RO resource #2}, selectable resource set #2 corresponding to the number of transmissions, 4, includes {RO resource #3, RO resource #4, RO resource #5}, and selectable resource set #3 corresponding to the number of transmissions, 8, includes {RO resource #6, RO resource #7, RO resource #8}.

Of course, the embodiment illustrated in FIG. 8 can be implemented alone or in combination with other embodiments of the present disclosure; for example, can be implemented in combination with the embodiments illustrated in FIG. 6 or FIG. 7.

The above is only an illustrative description. In actual applications, the solution of dividing the available PRACH resources causing different selectable resource sets corresponding to different numbers of transmissions of the PRACH should all fall within the scope of protection of the present disclosure.

In the above embodiment, the network side device may divide the available PRACH resources pre-allocated to the terminal based on the association information to obtain two or more selectable resource sets, and different selectable resource sets correspond to different numbers of transmissions of the PRACH. The association information may be determined in a variety of manner. It is ensured that the network side device may determine the number of transmissions of the PRACH transmitted by the terminal through the PRACH resource used by the terminal, thus improving a success rate of receiving an RAR message and a success rate of random access.

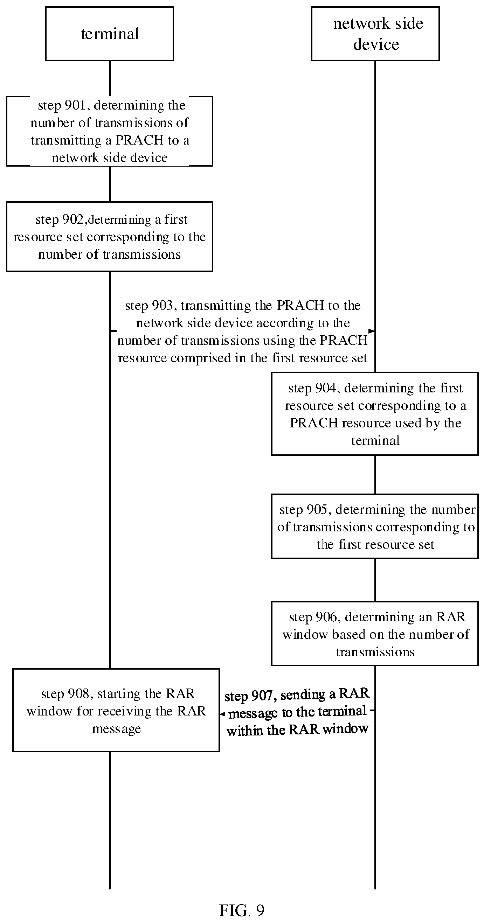

In some optional embodiments, referring to FIG. 9, FIG. 9 is a flowchart of a random access method according to an embodiment, and the method may include the following steps.

At step 901, a terminal determines the number of transmissions of transmitting a PRACH to a network side device.

The specific determination method is similar to step 301 and will not be repeated here.

At step 902, the terminal determines a first resource set corresponding to the number of transmissions.

The PRACH resource included in the first resource set indicates the number of transmissions to the network side device.

At step 903, the terminal transmits the PRACH to the network side device according to the number of transmissions using the PRACH resource comprised in the first resource set.

At step 904, the network side device determines the first resource set corresponding to a PRACH resource used by the terminal.

At step 905, the network-side device determines the number of transmissions corresponding to the first resource set.

At step 906, the network side device determines an RAR window based on the number of transmissions.

At step 907, the network side device sends a RAR message to the terminal within the RAR window.

At step 908, the terminal starts the RAR window for receiving the RAR message.

The specific implementation methods of the above steps have been introduced above and will not be repeated here.

In the above embodiment, the terminal indicates to the network side device to the number of transmissions of transmitting the PRACH, and the network side device determines the number of transmissions according to the indication of the terminal, thus ensuring that the time points at which the network side device and the terminal start the RAR window are consistent, improving a success rate of receiving the RAR message and a success rate of random access.

Corresponding to the embodiment of the aforementioned application function implementation method, the present disclosure also provides an embodiment of an application function implementation apparatus.

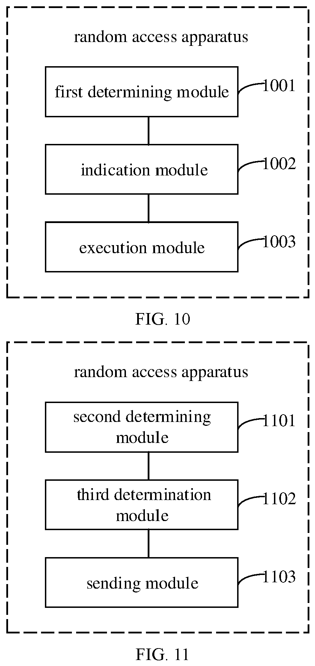

Referring to FIG. 10, FIG. 10 is a block diagram of a random access apparatus according to an embodiment. The apparatus is applied to a terminal and includes:
a first determining module 1001, configured to determine the number of transmissions of transmitting a physical random access channel (PRACH) to a network side device;
an indication module 1002, configured to indicate the number of transmissions to the network side device; and
an execution module 1003, configured to start a random access response (RAR) window for receiving an RAR message when reaching a first time point, in which the first time point is a time point after which the terminal has completed PRACH transmissions for the number of transmissions.

Referring to FIG. 11, FIG. 11 is a block diagram of a random access apparatus according to an embodiment. The apparatus is applied to a network side device and includes:
a second determining module 1101, configured to determine the number of transmissions of transmitting a physical random access channel (PRACH) indicated by a terminal;
a third determination module 1102, configured to determine a random access response (RAR) window based on the number of transmissions; and
a sending module 1103, configured to send an RAR message to the terminal within the RAR window.

For the apparatus embodiments, since they basically correspond to the method embodiments, relevant parts can refer to the partial description of the method embodiments. The apparatus embodiments described above are only schematic, the units described above as separate components may or may not be physically separated, and the components displayed as units may or may not be physical units, that is, they may be located in one place, or they may be distributed on multiple network units. Some or all of the modules may be selected according to actual needs to achieve the purpose of the solution in the present disclosure. An ordinary skilled person in the art may understand and implement the present disclosure without creative work.

Correspondingly, the present disclosure also provides a computer-readable storage medium, having a computer program stored thereon. The computer program is configured to perform any of the random access methods described above on the terminal side.

Correspondingly, the present disclosure also provides a computer-readable storage medium, having a computer program stored thereon. The computer program is configured to perform any of the random access methods described above on the network side device side.

Accordingly, the present disclosure also provides a random access apparatus, including:
a processor; and
a memory for storing instructions executable by the processor;
in which, the processor is configured to perform any of the random access methods described above on the terminal side.

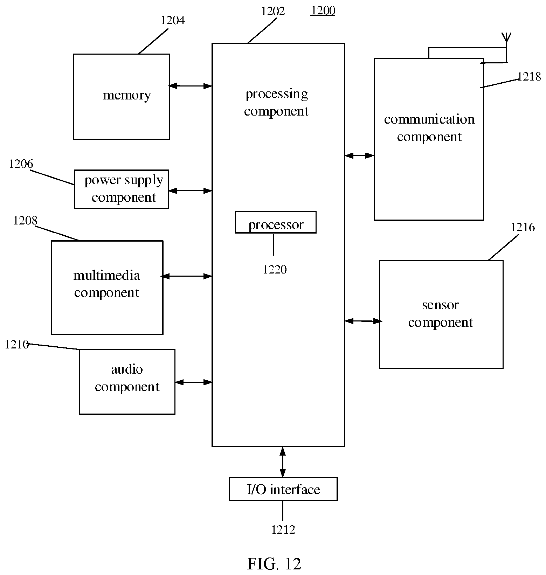

FIG. 12 is a block diagram illustrating an information transmission apparatus 1200 according to an example embodiment. For example, the apparatus 1200 may be a mobile phone, a tablet, an e-book reader, a multimedia playback device, a wearable device, an on-board user device, an iPad, a smart TVs and other terminals.

As illustrated in FIG. 12, the apparatus 1200 may include one or more components: a processing component 1202, a memory 1204, a power supply component 1206, a multimedia component 1208, an audio component 1210, an input/output (I/O) interface 1212, a sensor component 1216, and a communication component 1218.

The processing component 1202 generally controls an entire operation of the apparatus 1200, such as operations related to display, phone call, data communication, camera operation and recording operation. The processing component 1202 may include one or more processors 820 to perform instructions, to complete all or part of steps of the above method. In addition, the processing component 1202 may include one or more modules for the convenience of interaction between the processing component 1202 and other components. For example, the processing unit 1202 may include a multimedia module for the convenience of interaction between the multimedia component 1208 and the processing component 1202. For example, the processing component 1202 may read executable instructions from the memory to implement the steps of the random access method provided in the above embodiments.

The memory 1204 is configured to store all types of data to support the operation of the apparatus 1200. Examples of the data include the instructions of any applications or methods operated on the apparatus 1200, contact data, phone book data, messages, pictures, videos, etc. The memory 1204 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The power supply component 1206 may provide power supply for all units of the apparatus 1200. The power supply component 1206 may include a power supply management system, one or more power supplies, and other units related to generating, managing and distributing power for the apparatus 1200.

The multimedia component 1208 includes an output interface screen provided between the apparatus 1200 and the user. In some embodiments, the multimedia component 1208 includes a front camera and/or a rear camera. When the apparatus 1200 is in operation mode, such as shooting mode or video mode, the front camera or the rear camera may receive the external multimedia data. Every front camera and rear camera may be a fixed optical lens system or an optical lens system with focal length and optical zoom capacity.

The audio component 1210 is configured as an output and/or input signal. For example, the audio component 1210 includes a microphone (MIC). When the apparatus 1200 is in operation mode, such as call mode, record mode, and speech recognition mode, the microphone is configured to receive external audio signals. The audio signals received may be further stored in the memory 1204 or sent via the communication units 816. In some embodiments, the audio component 1210 further includes a speaker configured to output an audio signal.

The I/O interface 1212 provides an interface for the processing component 1202 and the peripheral interface module, and the peripheral interface module may be a keyboard, a click wheel, a button, etc. The buttons may include but not limited to a home button, a volume button, a start button and a lock button.

The sensor component 1216 includes one or more sensors, configured to provide various aspects of status assessment for the apparatus 1200. For example, the sensor component 1216 may detect the on/off state of the apparatus 1200 and the relative positioning of the component. For example, the component is the display and the keypad of the apparatus 1200, the sensor component 1216 may also detect the location change of the apparatus 1200 or one component of the apparatus 1200, the presence or absence of contact between the user and the apparatus 1200, the orientation or acceleration/deceleration of the apparatus 1200, and the temperature change of the apparatus 1200. The sensor component 1216 may include a proximity sensor, which is configured to detect presence of the objects nearby without any physical contact. The sensor component 1216 may further include a light sensor such as a CMOS or CCD image sensor, which is configured to use in imaging applications. In some embodiments, the sensor units 814 may further include an acceleration transducer, a gyroscope sensor, a magnetic sensor, a pressure sensor or a temperature sensor.

The communication component 1218 may be configured for the convenience of wired or wireless communication between the apparatus 1200 and other devices. The apparatus 1200 may access wireless networks based on a communication standard, such as Wi-Fi, 2G, 3G, 4G, 5G or 6G, or their combination. In an exemplary embodiment, the communication component 1218 receives broadcast signals or broadcast-related information from an external broadcast management system via a broadcast channel. In an example embodiment, the communication component 1218 further includes a near field communication (NFC) module to facilitate short-range communication. For example, the NFC module may be implemented based on a radio frequency identification (RFID) technology, an infrared data association (IrDA) technology, an ultra-wideband (UWB) technology, Bluetooth (BT) technology and other technologies.

In an example embodiment, the apparatus 1200 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform any of the random access methods described above on the terminal side.

Accordingly, the present disclosure also provides a random access apparatus, including:
a processor; and
a memory for storing instructions executable by the processor;
in which, the processor is configured to perform any of the random access methods described above on the network side device side.

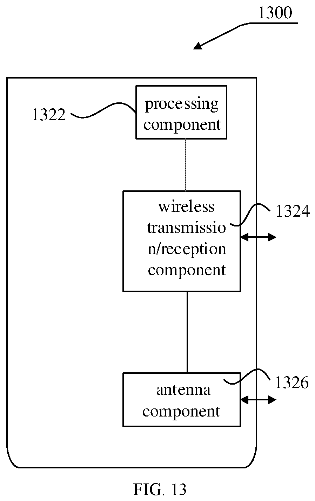

As illustrated in FIG. 13, FIG. 13 is a schematic structural diagram illustrating a random access apparatus 1300 according to an embodiment of the present disclosure. For example, the random access apparatus 1300 may be provided as a network side device. As illustrated in FIG. 13, the apparatus 1300 includes a processing component 1322, a wireless transmission/reception component 1324, an antenna component 1326, and a signal processing part specific to a wireless interface, and the processing component 1322 may further include at least one processor.

One of the processors in the processing component 1322 may be configured to execute any of the random access methods described above on the network side device side.

After considering the specification and practicing the disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present invention is not limited to the precise structure described above and shown in the drawings, and various modifications and changes may be made without departing from its scope. The scope of the present application is only limited by the appended claims.

## Claims

1. A random access method, performed by a terminal, comprising:
determining the number of transmissions of transmitting a physical random access channel (PRACH) to a network side device;
indicating the number of transmissions to the network side device; and
starting a random access response (RAR) window for receiving an RAR message when reaching a first time point, wherein the first time point is a time point after which the terminal has completed PRACH transmissions for the number of transmissions.

2. The method according to claim 1, wherein indicating the number of transmissions to the network side device comprises:
determining a first resource set corresponding to the number of transmissions; wherein a PRACH resource comprised in the first resource set is configured to indicate the number of transmissions to the network side device; and
transmitting the PRACH to the network side device according to the number of transmissions using the PRACH resource comprised in the first resource set.

3. The method according to claim 2, wherein determining the first resource set corresponding to the number of transmissions comprises:
determining two or more selectable resource sets based on available PRACH resources pre-allocated to the terminal; wherein different selectable resource sets correspond to different numbers of transmissions of the PRACH; and
determining, from the two or more selectable resource sets, a selectable resource set corresponding to the number of transmissions as the first resource set.

4. The method according to claim 3, further comprising:
determining association information, wherein the association information is configured to divide the available PRACH resources to determine the two or more selectable resource sets.

5. The method according to claim 4, wherein the association information indicates the number of resources comprised in each of the selectable resource sets.

6. The method according to claim 4, wherein the association information indicates a division manner for dividing the available PRACH resources.

7. The method according to claim 4, wherein the association information comprises at least one of:
resource indexes comprised in the available PRACH resources;
a starting resource index for each of the selectable resource sets;
an ending resource index for each of the selectable resource sets; or
the number of resource indexes of each of the selectable resource sets.

8. The method according to claim 4, wherein the association information comprises set index values of the selectable resource sets corresponding to different numbers of transmissions.

9. The method according to claim 4, wherein determining the association information comprises at least one of:
determining the association information based on a protocol agreement; or
determining the association information based on indication information sent by the network side device.

10. The method according to claim 9, further comprising:
receiving the indication information sent by the network side device via a first message.

11. The method according to claim 10, wherein the first message is any one of:
a system information block (SIB) message;
downlink control information (DCI) for scheduling the SIB message; or
a radio resource control (RRC) reconfiguration signaling.

12. The method according to any one of claims 3 to 11, wherein the available PRACH resources comprise at least one of:
available preamble resources; or
available random access occasion (RO) resources.

13. The method according to claim 1, wherein determining the number of transmissions of transmitting the PRACH to the network side device comprises:
measuring a synchronization signal reference signal receiving power (RSRP) to obtain a measurement value; and
determining the number of transmissions based on the measurement value and at least one preset RSRP threshold.

14. The method according to claim 13, wherein determining the number of transmissions based on the measurement value and the at least one preset RSRP threshold comprises:
determining, from the at least one preset RSRP threshold, a first RSRP threshold greater than the measurement value and having a minimum difference with the measurement value; and
determining, based on preset numbers of transmissions corresponding to different RSRP thresholds, a preset number of transmission corresponding to the first RSRP threshold as the number of transmissions.

15. A random access method, performed by a network side device, comprising:
determining the number of transmissions of transmitting a physical random access channel (PRACH) indicated by a terminal;
determining a random access response (RAR) window based on the number of transmissions; and
sending an RAR message to the terminal within the RAR window.

16. The method according to claim 15, wherein determining the number of transmissions of transmitting the PRACH indicated by the terminal comprises:
determining two or more selectable resource sets based on available PRACH resources pre-allocated to the terminal; wherein different selectable resource sets correspond to different numbers of transmissions of the PRACH;
determining a first resource set corresponding to a PRACH resource used by the terminal; and
determining the number of transmissions corresponding to the first resource set.

17. The method according to claim 16, further comprising:
determining association information, wherein the association information is configured to divide the available PRACH resources to determine the two or more selectable resource sets.

18. The method according to claim 17, wherein the association information indicates the number of resources comprised in each of the selectable resource sets.

19. The method according to claim 17, wherein the association information indicates a division manner for dividing the available PRACH resources.

20. The method according to claim 17, wherein the association information comprises at least one of:
resource indexes comprised in the available PRACH resources;
a starting resource index for each of the selectable resource sets;
an ending resource index for each of the selectable resource sets; or
the number of resource indexes of each of the selectable resource sets.

21. The method according to claim 17, wherein the association information comprises set index values of the selectable resource sets corresponding to different numbers of transmissions.

22. The method according to claim 17, wherein determining the association information comprises at least one of:
determining the association information based on a protocol agreement; or
determining the association information by the network side device.

23. The method according to claim 21, further comprising:
sending, to the terminal, indication information for determining the association information.

24. The method according to claim 23, wherein sending, to the terminal, the indication information for determining the association information comprises:
sending, to the terminal, the indication information via a first message.

25. The method according to claim 24, wherein the first message is any one of:
a system information block (SIB) message;
downlink control information (DCI) for scheduling the SIB message; or
a radio resource control (RRC) reconfiguration signaling.

26. The method according to any one of claims 17 to 25, wherein the available PRACH resources comprise at least one of:
available preamble resources; or
available random access occasion (RO) resources.

27. A random access apparatus, configured in a terminal, comprising:
a first determining module, configured to determine the number of transmissions of transmitting a physical random access channel (PRACH) to a network side device;
an indication module, configured to indicate the number of transmissions to the network side device; and
an execution module, configured to start a random access response (RAR) window for receiving an RAR message when reaching a first time point, wherein the first time point is a time point after which the terminal has completed PRACH transmissions for the number of transmissions.

28. A random access apparatus, configured in a network side device, comprising:
a second determining module, configured to determine the number of transmissions of transmitting a physical random access channel (PRACH) indicated by a terminal;
a third determination module, configured to determine a random access response (RAR) window based on the number of transmissions; and
a sending module, configured to send an RAR message to the terminal within the RAR window.

29. A computer-readable storage medium, having a computer program stored thereon, wherein the computer program is configured to perform the random access method according to any one of claims 1 to 14.

30. A computer-readable storage medium, having a computer program stored thereon, wherein the computer program is configured to perform the random access method according to any one of claims 15 to 26.

31. A random access apparatus, comprising:
a processor; and
a memory for storing instructions executable by the processor;
wherein the processor is configured to perform the random access method according to any one of claims 1 to 14.

32. A random access apparatus, comprising:
a processor; and
a memory for storing instructions executable by the processor;
wherein the processor is configured to perform the random access method according to any one of claims 15 to 26.
